# EUROPEAN PATENT APPLICATION

(11) **EP 3 739 468 A1**
(43) Date of publication of application: **18.11.2020**
(21) Application number: 19175052.0
(22) Date of filing: 17.05.2019
(51) Int. Cl.: G06F 16/29, G06F 16/909

(54) **SYSTEM FOR AND METHOD OF LODGING GEOREFERENCED DIGITAL USER-GENERATED CONTENT**

(71) Applicant: Mapstar AG, 76131 Karlsruhe (DE)
(72) Inventor: Shirzad, Shora, 76131 Karlsruhe (DE); Gauger, Jonathan, 76131 Karlsruhe (DE); Blatner, Dimitri, 76131 Karlsruhe (DE)
(74) Representative: Meyer zu Bexten, Elmar

(57) **Abstract**

**Problem**

The invention seeks an alternative to known systems for lodging georeferenced digital user-generated content which provides the same or similar effects or is more cost-effective.

**Solution**

System (10) for lodging georeferenced digital user-generated content, characterized in
an integrated development environment (11) for implementing user functions (14) on an object (15) representing the content,
a map service (12) such as Mapbox (42) for augmenting the object (15) with street-level imagery of a user's location, and
a backend (13) for integrating the functions (14) and serving a mobile client device such as a smartphone of the user.

## Description

### Technical Field

The invention relates to the products and process as per the first portion of the independent claims.

### Background Art

In geoinformatics, geographic data and information, as defined in the ISO/TC 211 series of standards, are such data and information having an implicit or explicit association with a location relative to the Earth. The same concept is sometimes referred to, respectively, as geospatial data and information, georeferenced data and information, or geodata and geoinformation.

By way of example, PTL1 discloses a system for lodging georeferenced digital user-generated content such as advertising. Independently, NPL1 proposes a street-level georeferenced panorama content for geospatial mashups.

### Summary of invention

The invention as claimed is hereinafter disclosed in such a way that the technical problem with which it deals can be appreciated and the solution can be understood.

### Technical Problem

The invention seeks an alternative to known systems for lodging georeferenced digital user-generated content which provides the same or similar effects or is more cost-effective.

### Solution to Problem

The problem is solved by a system as per the second portion of Claim 1.

In a preferred embodiment, virtual objects (2D or 3D) are lodged (placed) on (real) world coordinates and displayed on these world coordinates by means of augmented reality (AR). The world coordinates are stored together with the virtual objects. Virtual objects can have any form (2D or 3D) and can be interactive, i. e., allow for interaction with the user on a mobile device such as a smartphone or smart glasses via touch input, movement of the device, or voice.

### Advantageous effect of invention

The invention bears the advantage of allowing users to place digital content in their favorite locations in an interactive and entertaining fashion, permitting them to experience their best moments repeatedly. This way, locations may be associated with a digital timeline or entire "augmented reality tours" can be devised.

### Brief description of drawings

Figure 1 shows the complete software stack of an application as per the invention.
Figure 2 shows a picture object.
Figure 3 shows a text object.
Figure 4 shows an audio object.
Figure 5 shows a video object.
Figure 6 shows a 360° video object.

### Description of embodiments

A system as per the invention serves as backend to a smartphone app that uses the smartphone camera to overlay reality with digital user-generated content. Information is visualized three-dimensionally at the geostationary position where it was recorded.

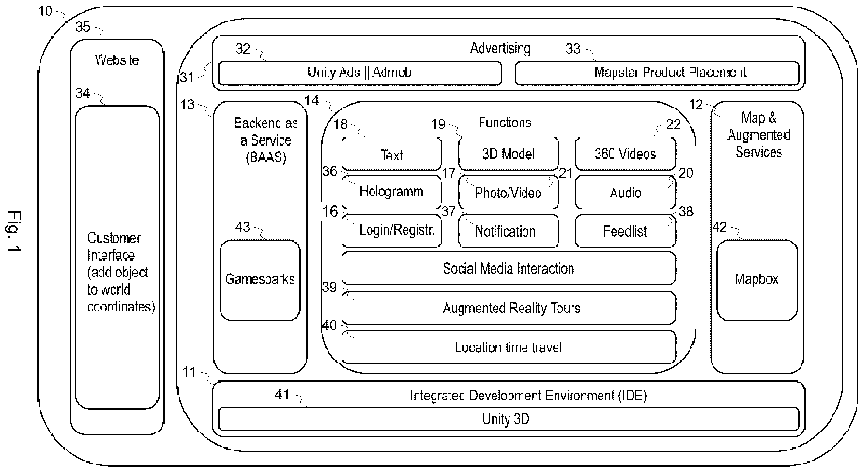

The information technology infrastructure provided for this purpose consists of various components. Figure 1 represents this so-called full stack of the system (10).

All functions (14) and their corresponding logic have been integrated into a backend as a service (BaaS) solution (13) such as Gamesparks (43). Any user information is retrieved and stored in this BaaS (13).

The application is implemented using the development environment (11) Unity 3D (41). All user interface elements and user functions (14) are implemented in this integrated development environment (IDE).

A user is localized by means of his terminal device and its reception modalities. To represent augmented reality content and geography, a map service (12) such as Mapbox (42) is used.

Objects are created using ready-made digital templates hereinafter referred to as "prefabs". All such prefabs feature the following:
- the user's profile picture
- the location of the object once placed,
- the creation date as well as the social media options, and
- a ground mark consisting of a star containing the letter "M".

The user functions (14) and object prefabs will now be elucidated in further detail.

By means of a dedicated backend component (16), the user can log in or register via his mobile application and maintain his profile.

Virtual (AR) objects can be positioned on recognized surfaces or freely in space at world coordinates (position and rotation in space).

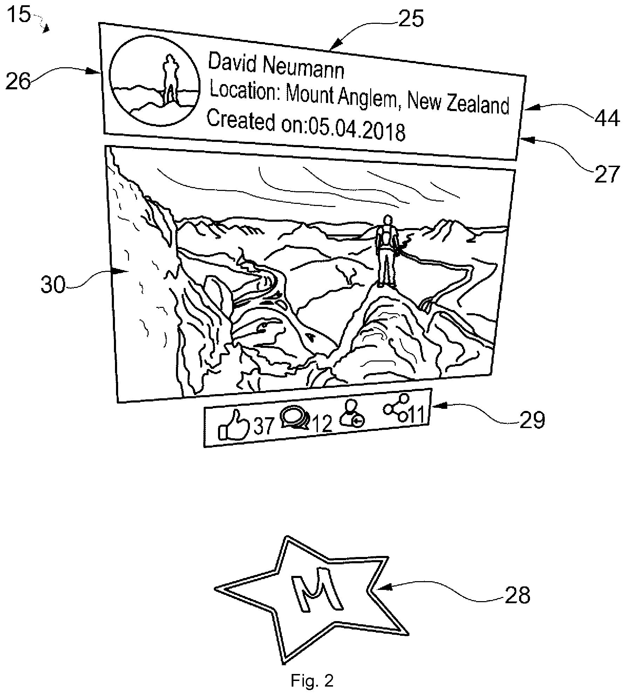

"PicMapstar" is an object that allows the user to create a photo (17) or other image and place it at desired world coordinates. Figure 2 gives an example of a PicMapstar object (15).

Images in the PicMapstar may optionally cover more than a 120° field of view, e. g., 180° or 360°, and can be either monoscopic or stereoscopic (2D or 3D).

The GroundMapstar can be present on the PicMapstar as well as on all other Mapstar or virtual objects and serves as a reference point for the ground. The GroundMapstar is optional and can omitted depending on the nature of the virtual object or content.

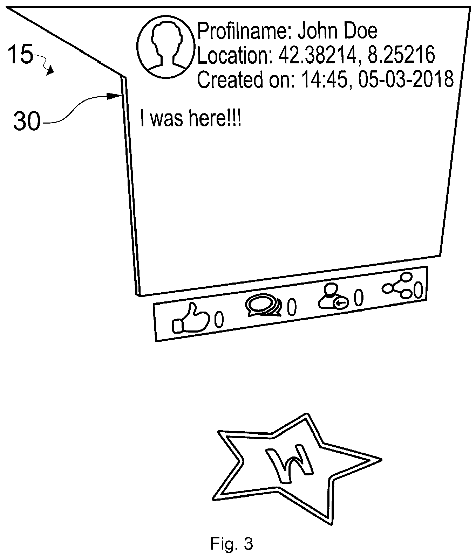

"TextMapstar" allows users to lodge text (18) at desired world coordinates. Figure 3 gives an example of a TextMapstar object (15).

A TextMapstar may optionally be displayed as a simple three-dimensional text devoid of background or GroundMapstar.

"ModeIMapstar" allows users to place a 3D model (19) at desired world coordinates. Services are available that provide various 3D models via an application programming interface (API).

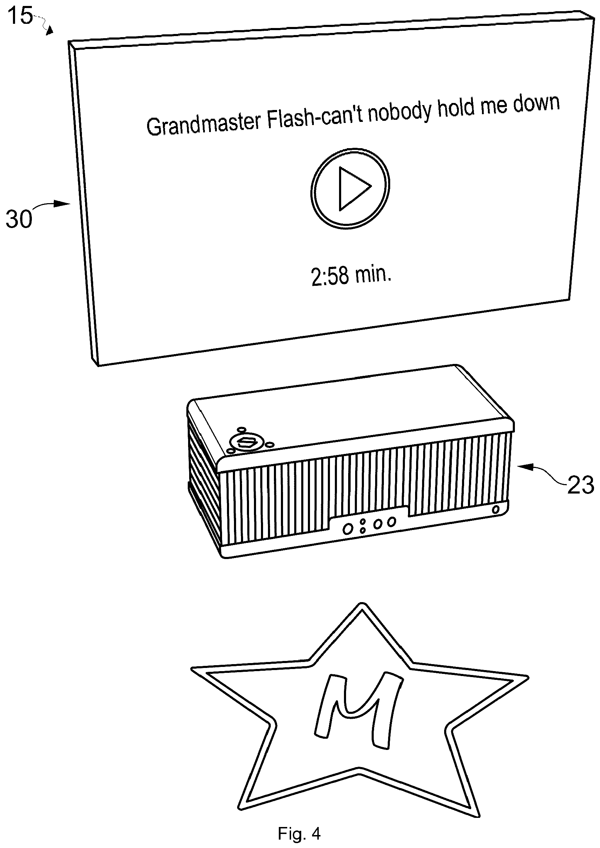

"AudioMapstar" allows users to record and place voice messages or other audio (20) at desired world coordinates. Figure 4 gives an example of an AudioMapstar object (15).

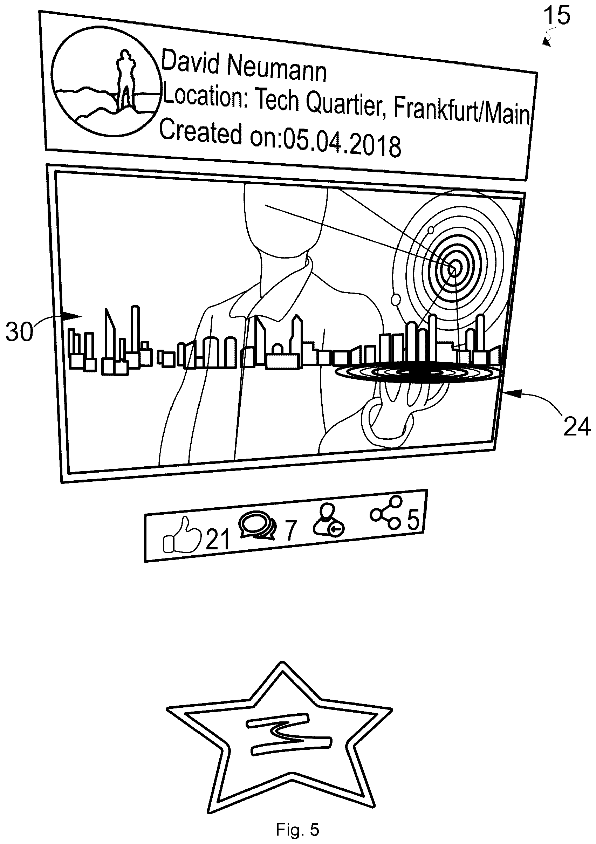

"VideoMapstar" allows users to record and place video (21) content at desired world coordinates. To this end, various 3D TV models or other video frames (24) are made available to the user. Figure 5 gives an example of a VideoMapstar object (15).

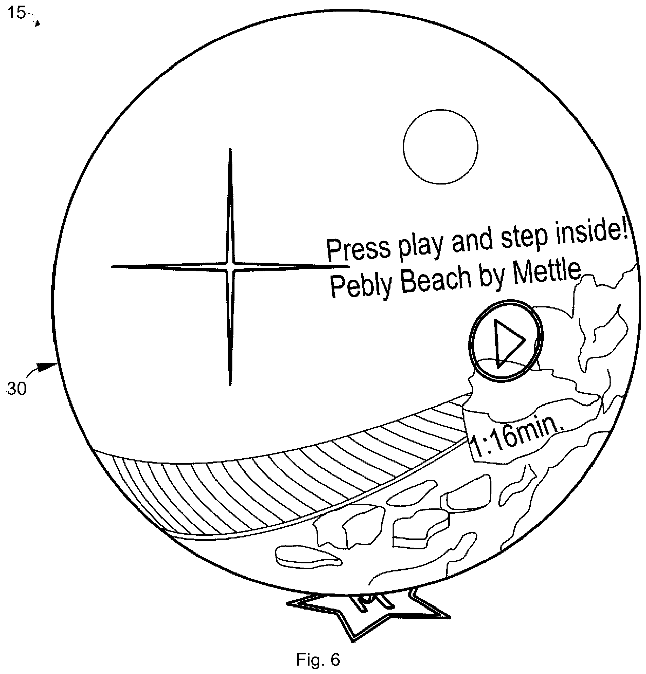

"360° VideoMapstar" allows users to place and import 360° video (22) from other platforms such as the Youtube video service. Through 360° live video streams, users can choose to virtually join concerts, sports, or other entertainment events. Figure 6 gives an example of a 360° VideoMapstar object (15).

Through a service provider, the system (10) allows the user to access a database interface and select and place an arbitrary hologram (36).

Users can create new virtual objects (2D/3D) such as 3D drawings and place, attach, or bind them to world coordinates, or combine and select (one or more) available virtual objects into a "collection" or "scene" and lodge it accordingly.

Virtual (AR) objects may enable user interaction via touch inputs, speech or movement of the display device with one or more users simultaneously. Virtual objects can be animated and move.

Interactive content can take the form of mini games placed at world coordinates such as a quiz or chess. Virtual objects can move or travel from world coordinate to world coordinate. This can be used, for example, to navigate the user.

Virtual objects can also be virtual (3D) spaces that are placed on world coordinates, or in shops or "showcases". These virtual spaces are displayed in augmented reality and can be traversed by the user.

Mapstar events are events in the form of one or more virtual AR objects that can be placed at or bound to specified world coordinates and represent real or virtual events. Mapstar events themselves are virtual AR objects that users can interact with. Mapstar events are created by the provider of the system, business partners, customers, marketing partners or networks, or by authorized users. Mapstar events or happenings may take the form of historical, public, tourist, artistic, or otherwise entertaining events (concerts, festivals, films, or art events) or relate to celebrities (public figures). Users can conduct competitions or challenges or competitions by creating one or more virtual objects and creating a photo or video of themselves and these virtual objects. Competitions can be placed at or tied to world coordinates. Other users can participate in competitions by selecting them through interaction (touch gesture, movement of the device) and creating a photo or video with one or more virtual objects and placing them at or binding them to world coordinates (all in AR). Users can also add one or more categories or keywords to any text, description, comment, etc., prefixing a hash tag ("#"), which one or more users can search for.

If a user has placed an object (15), each of his followers will receive a notification (37) featuring
- profile information,
- location,
- wireless network,
- information on the class of the object (text, photo, video, audio, or 360°),
- world coordinates (dual frequency), and
- feature points.

If a user follows another user, he or she will receive all activities in his feed list (38). In addition, a user will receive in his list further suggestions regarding local augmented reality content (30).

All objects (15) offer social media options (29 - Figure 2) such as for liking or commenting on the respective object (15) and sharing content with other users within or independently of the system (10).

By linking the previously created objects (15), the user may choose to combine them into what may be considered augmented reality tours (39) and make them available to other users.

A Mapstar AR tour is a collection of virtual objects in certain order. Because each virtual object has a world coordinate as part of a tour, a Mapstar tour represents a path or track in the real world, such as a hiking trail, a city tour, a guided tour of a museum, or user-generated tour.

If content (30) is lodged at a position, then its history may be revisited by means of a feature entitled "location time travel" (40). To this end, the user can enter a historical date and the corresponding content (30) - including any comments, "likes", and "shares" - is retrieved. Presentation takes place in a vertical 3D menu wherein the content may be scrolled up or down. Herein, all listed objects (15) are displayed as 3D models in front of the terminal device.

The Unity 3D (41) development environment (11) as well as AdMob (32), now owned by Google Inc., provide simple interfaces for the integration of advertising (31). Both solutions are integrated with the system (10).

Via an associated website (35) and its customer interface (34), advertisers may upload content and assign it to an object prefab as well as one or more geographical positions. Every user who visits the corresponding locations gains access to the content.

Any type of virtual AR object can also be used for promotional purposes in AR. Also, virtual objects themselves can be AR advertising.

In terms of user interaction, all prefabs "behave" like real objects. The interaction options (buttons, dropdowns, touch gestures, language) can be attached directly to the object itself. Virtual objects may include references that, interactively guide the user to a URL, shop, or other business, for example, to buy a product.

For purposes of product placement (33), advertisers are offered a selection of Fonts for the creation and placement of TextMapstar objects (15), allowing to select one font, write using that font, and place it at desired world coordinates. In addition to the text (18) itself, a sponsor of the font may be indicated.

### Industrial applicability

The invention is applicable, among others, throughout the tourism and advertising industries.

### Reference signs list

- 10: System
- 11: Integrated development environment
- 12: Map service
- 13: Backend as a service
- 14: Functions
- 15: Object
- 16: Login and registration
- 17: Photo
- 18: Text
- 19: Model
- 20: Audio
- 21: Video
- 22: 360° Video
- 23: Arbitrary loudspeaker
- 24: Arbitrary video frame
- 25: User name
- 26: Profile picture
- 27: Creation date
- 28: Ground mark
- 29: Social media options
- 30: Content
- 31: Advertising
- 32: Unity Ads or AdMob
- 33: Product placement
- 34: Customer interface
- 35: Website
- 36: Hologram
- 37: Notification
- 38: Feed list
- 39: Augmented reality tours
- 40: Location time travel
- 41: Unity 3D
- 42: Mapbox
- 43: Gamesparks
- 44: Location

### Citation list

The following documents are cited hereinbefore.

### Patent literature

PTL1: US 20120162225 A (GOOGLE INC [US]) 28.06.2012

### Non-patent literature

NPL1: YOON, Boram, et al. Introduction To A New Geo-Referenced Street Level Content: 3D GEOPANO. Free and Open Source Software for Geospatial (FOSS4G) Conference Proceedings. 2015, vol.15, no.1, p. 10.

## Claims

1. System (10) for lodging georeferenced digital user-generated content (30), **characterized in**
an integrated development environment (11) for implementing user functions (14) on an object (15) representing the content (30),
a map service (12) such as Mapbox (42) for augmenting the object (15) with street-level imagery of a user's location, and
a backend (13) for integrating the functions (14) and serving a mobile client device such as a smartphone of the user.

2. System (10) as per Claim 1
wherein
the functions (14) further pertain to login and registration (16) of the user.

3. System (10) as per Claim 1 or Claim 2
wherein
depending on a class of the object (15), the content (30) comprises:
a still picture, such as a photo (17),
a text (18),
a spatial model (19),
an audio (20) recording such as a voice message, preferably symbolized by an arbitrary loudspeaker (23),
a video (21) recording, preferably symbolized by an arbitrary video frame (24), or
a panoramic video feed (22), preferably providing a viewing angle of 360°.

4. System (10) as per any of the preceding claims
wherein
the object (15) visualizes at least one of the following:
a name (25) and profile picture (26) of the user,
the location (44) of the object (15),
a creation date (27) of the content (30), or
a ground mark (28) associated with the system (10).

5. System (10) as per any of the preceding claims,
further comprising
advertising (31), such as through Unity Ads or AdMob (32), or product placement (33).

6. System (10) as per any of the preceding claims,
further comprising
a customer interface (34) for maintaining, such as creating and placing, the object (15).

7. System (10) as per Claim 6
wherein
the interface (34) is provided through a website (35).

8. Method of lodging georeferenced digital user-generated content (30), **characterized in**
implementing user functions (14) on an object (15) representing the content (30),
augmenting the object (15) with street-level imagery of a user's location, and integrating the functions (14) and serving a mobile client device such as a smartphone of the user.

9. Computer program comprising instructions which, when the program is executed by a computer, cause the computer to carry out the method of Claim 8.

10. Data carrier signal carrying the computer program of Claim 9.
